(19) Europäisches Patentamt
European Patent Office
Office européen des brevets

(11) EP 2 560 032 A1

(12) **EUROPEAN PATENT APPLICATION**
published in accordance with Art. 153(4) EPC

(43) Date of publication:
**20.02.2013 Bulletin 2013/08**

(21) Application number: **11768595.8**

(22) Date of filing: **06.04.2011**

(51) Int Cl.:
***G02B 5/08*** *(2006.01)* ***F21S 11/00*** *(2006.01)*

(86) International application number:
**PCT/JP2011/002035**

(87) International publication number:
**WO 2011/129069 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2010 JP 2010093840**

(71) Applicant: **Sony Corporation**
**Tokyo 108-0075 (JP)**

(72) Inventors:
- **SUZUKI, Masaki**
  **Tokyo 108-0075 (JP)**
- **TSUIKI, Hirofumi**
  **Tokyo 108-0075 (JP)**
- **HASEGAWA, Hayato**
  **Tokyo 108-0075 (JP)**
- **ENOMOTO, Masashi**
  **Tokyo 108-0075 (JP)**

(74) Representative: **Müller - Hoffmann & Partner**
**Patentanwälte**
**Innere Wiener Strasse 17**
**81667 München (DE)**

# (54) OPTICAL ELEMENT AND ILLUMINATING APPARATUS

(57) [Object] To provide an optical device which is capable of improving a light-introduction efficiency, and which may be made thinner.

[Solving Means] The optical device 1 according to an embodiment of the present invention includes a structural layer 13 including a plurality of reflection surfaces 13a, which reflect light entering the light-incident surface 11 toward the light-output surface 12. The above-mentioned reflection surface 13a has a first length (h) in the X-axis direction. The reflection surfaces 13a are arrayed in the Z-axis direction orthogonal to the X-axis direction at pitches (p). The reflection surfaces 13a satisfy a relation of h=(2n-1) ·p/tanθ, where θ is indicative of an incident angle of light with respect to the X-axis direction, the light being light travelling on an XZ plane out of light entering the reflection surface 13a, and n is indicative of the number of reflection of incident light by the reflection surface 13a, the angle θ being any angle satisfying the range of 6.5°≤θ≤87.5°.

FIG.2
1
13
130 13a
11
102a
102b
12
130
130
L1
L2
θ
Z
X
Y
p
w
h
W 101 104
102 111
14

EP 2 560 032 A1

## Description

### Technical Field

The present invention relates to an optical device used as a daylighting device of sunlight, artificial light, and the like, and an illuminating device.

### Background Art

In recent years, a sunlight daylighting device, which introduces sunlight emitted from the sky toward a ceiling in a room, has been developed to reduce electric power consumptions of lightening equipments used in the daytime. As conventional sunlight daylighting devices, a wide variety of structures such as an optical duct, a louver, and a blind are known.

For example, Patent Document 1 describes an optical component, which directionally outputs incident light by using total reflection in an airspace formed in an optically-transparent main body. Patent Document 2 describes a sunlight illuminator, which includes a plurality of rod-shaped elemental components formed of a transparent material, and a support unit supporting the plurality of elemental components such that they are arrayed in parallel with each other, which reflects sunlight entered from the outside of a room by reflection surfaces of the elemental components, and which guides the sunlight in the room-side ceiling direction. Patent Document 3 describes a sunlight daylighting device in which rod-shaped bodies arrayed on the surface of a plate-shaped transparent body diffuse and output incident light. Further, Patent Document 4 describes a light-guide plate in which a plurality of thin plastic band-like bodies having a second refractive index are inserted in a transparent plastic plate having a first refractive index, and in which incident light is directionally output because of the refractive index difference between that of the above-mentioned plate and that of the above-mentioned band-like bodies.

### Prior Art Document

### Patent Document

Patent Document 1: Japanese Patent Application Laid-open No. 2002-526906
Patent Document 2: Japanese Patent Application Laid-open No. 2009-266794
Patent Document 3: Japanese Patent No. 3513531
Patent Document 4: Japanese Patent Application Laid-open No. 2001-503190

### Disclosure of the Invention

### Problem to be solved by the Invention

In the field of sunlight daylighting devices, it is desired that light-introduction efficiency or light-beam-output efficiency to the above be increased. However, according to the structure of each of the above-mentioned Patent Documents, the thickness of the daylighting device should be made larger in order to directionally output incident light with high efficiency, and it is difficult to structure the daylighting device by using a thin film.

In view of the above-mentioned circumstances, it is an object of the present invention to provide an optical device, which may improve light-introduction efficiency and may be made thinner, and an illuminating device including the optical device.

### Means for solving the Problem

To attain the above-mentioned object, an optical device according to an embodiment of the present invention includes a first surface, a second surface, and a structural layer.
The second surface faces the first surface in a first direction.
The structural layer includes a plurality of reflection surfaces. The plurality of reflection surfaces reflects light entering the first surface toward the second surface, the plurality of reflection surfaces having a first length in the first direction, the plurality of reflection surfaces being arrayed in a second direction orthogonal to the first direction, the plurality of reflection surfaces satisfying a relation of $h=(2n-1) \cdot p/\tan\theta$ where h is indicative of the first length, p is indicative of an array-pitch of the reflection surfaces, θ is indicative of an incident angle of incident light with respect to the first direction, the incident light being light travelling on a plane having the first direction and the second direction out of light entering the reflection surface, and n is indicative of the number of reflection of incident light by the reflection surface, the angle $\theta$ being any angle satisfying the range of $6.5° \leq \theta \leq 87.5°$.

Because the above-mentioned optical device includes the structural layer structured as described above, incident light, which enters each reflection surface from the above at the above-mentioned angular range, for example, may be output to the above from the second surface with high efficiency. Therefore, by using the above-mentioned optical device as a sunlight daylighting device, sunlight may be introduced toward a ceiling in a room with high efficiency. Further, according to the above-mentioned optical device, by structuring the structural layer as described above, the optical device may be made thinner.

By setting the set incident angular range of incident light at 6.5° or more and 87.5° or less, sunlight may be introduced with high efficiency in all seasons irrespective of area. Further, this will greatly reduce electric power consumptions of lightening equipments in the daytime.

An illuminating device according to an embodiment of the present invention includes a first surface, a second surface, a structural layer, and an illuminant.

The structural layer includes a plurality of reflection surfaces. The plurality of reflection surfaces reflects light entering the first surface toward the second surface, the plurality of reflection surfaces having a first length in the first direction, the plurality of reflection surfaces being arrayed in a second direction orthogonal to the first direction, the plurality of reflection surfaces satisfying a relation of $h=(2n-1) \cdot p/\tan\theta$ where h is indicative of the first length, p is indicative of an array-pitch of the reflection surfaces, $\theta$ is indicative of an incident angle of incident light with respect to the first direction, the incident light being light travelling on a plane having the first direction and the second direction out of light entering the reflection surface, and n is indicative of the number of reflection of incident light by the reflection surface, the angle $\theta$ being any angle satisfying the range of $6.5° \leq \theta \leq 87.5°$.

The illuminant is arranged such that the illuminant faces the first surface.

In the above-mentioned illuminating device, light, which is emitted from the illuminant, is output via the reflection surface of the above-mentioned structural layer.

As a result, lighting effects high in output intensity in a desired angular direction may be obtained. Further, because the above-mentioned structural layer may be structured by a thin film, a thin and well-decorative advertisement pillar may be provided by providing an advertising medium on the light-output-side surface, for example.

## Effect of the Invention

According to the present invention, light entering at a predetermined angular range may be output to a predetermined angular range with high efficiency. Further, the optical device may be made thinner.

## Brief Description of Drawings

[Fig. 1] A perspective view showing an example in which an optical device according to an embodiment of the present invention is used as a sunlight daylighting device.

[Fig. 2] A sectional view of an optical device according to a first embodiment of the present invention.

[Fig. 3] A schematic diagram for explaining functions of a reflection surface of the above-mentioned optical device.

[Fig. 4] A schematic diagram for explaining fluctuations of an intensity of light output to the above affected by dimension changes of the above-mentioned reflection surface.

[Fig. 5] A schematic diagram for explaining a relation between the thickness and the array-pitch of the above-mentioned reflection surfaces.

[Fig. 6] A schematic diagram for explaining fluctuations of an intensity of light output to the above affected by the thickness of the above-mentioned reflection surface.

[Figs. 7] Simulation results showing relations between the dimensions of respective portions of the above-mentioned reflection surface and the array-pitch, and a light intensity output to the above.

[Figs. 8] Simulation results showing relations between the dimensions of respective portions of the above-mentioned reflection surface and the array-pitch, and a light intensity output to the above.

[Figs. 9] Perspective views showing an example of a method of manufacturing the above-mentioned optical device, and showing a main process.

[Figs. 10] Sectional views showing a main structure of an optical device according to a second embodiment of the present invention.

[Fig. 11] A perspective view showing the structure of an optical device according to a third embodiment of the present invention.

[Fig. 12] An exploded perspective view showing the structure of an illuminating device according to an embodiment of the present invention.

[Figs. 13] Schematic diagrams of optical devices showing modified examples of the structure of the above-mentioned reflection surface.

[Figs. 14] Schematic diagrams of optical devices showing modified examples of the structure of the above-mentioned reflection surface.

[Fig. 15] A schematic diagram of an optical device showing a modified example of the structure of the above-mentioned reflection surface.

[Fig. 16] A schematic diagram of an optical device showing a modified example of the structure of the above-mentioned reflection surface.

[Figs. 17] Sectional views schematically showing modified examples of the structure of the optical device according to the embodiment of the present invention.

[Figs. 18] Sectional views schematically showing modified examples of the structure of the optical device according to the embodiment of the present invention.

Best Modes for Carrying Out the Invention

Hereinafter, embodiments of the present invention will be described with reference to the drawings.

<First Embodiment>

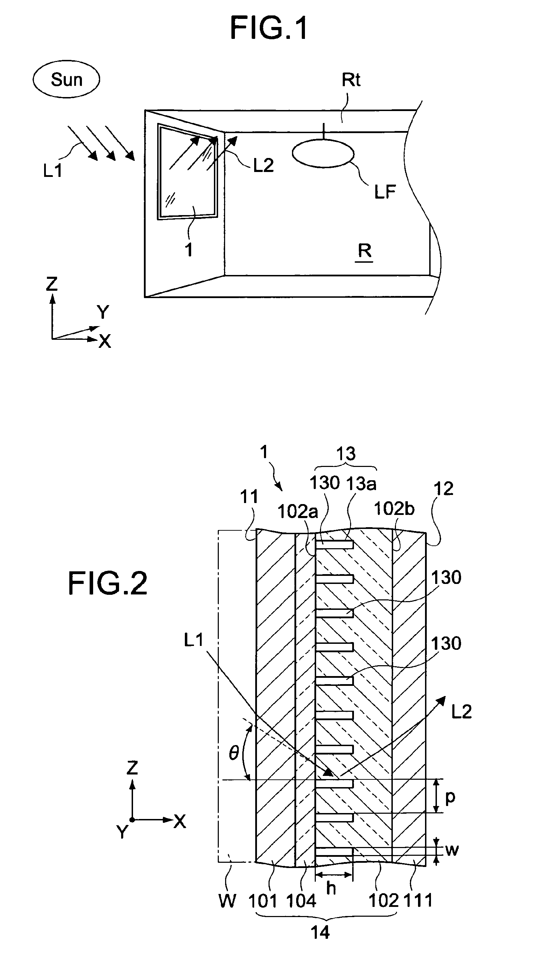

Fig. 1 is a schematic perspective view of a room showing an example in which an optical device according to an embodiment of the present invention is used for a window. An optical device 1 of this embodiment is structured as a sunlight daylighting device, which introduces sunlight L1 emitted outside into a room R, and is applied to a window material for a building, for example. The optical device 1 has a function of directionally outputting the sunlight L1, which is emitted from the sky, toward a ceiling Rt of the room R. The sunlight, which is introduced toward the ceiling Rt, is reflected by the ceiling Rt in a diffusing manner, and the room R is irradiated with the sunlight. Sunlight is used to illuminate a room in this manner, whereby an electric power consumed by a lightening fixture LF in the daytime may be reduced.

[Optical device]

Fig. 2 is a schematic sectional view showing a structure of the optical device 1. The optical device 1 has a layered structure including a first translucent film 101, a second translucent film 102, and a base material 111. In Fig. 2, X-axis direction is indicative of the thickness direction of the optical device 1, Y-axis direction is indicative of the horizontal direction on a surface of the optical device 1, and Z-axis direction is indicative of the vertical direction with respect to the above-mentioned surface.

The first translucent film 101 is formed of a transparent material. The first translucent film 101 is, for example, triacetylcellulose (TAC), polyester(TPEE), polyethylene terephthalate (PET), polyimide (PI), polyamide (PA), aramid, polyethylene (PE), polyacrylate, polyethersulfone, polysulfone, polypropylene (PP), diacetylcellulose, polyvinyl chloride, acrylic resin (PMMA), polycarbonate (PC), epoxy resin, urea resin, urethane resin, melamine resin, or the like. However, a material other than those may be used.

A structural layer 13 (described later) is formed on one surface 102a (first surface) of the second translucent film 102 (first base body), which faces the first translucent film 101. So, by using a resin material excellent in form-transcription efficiency, a structural layer excellent in form accuracy may be formed. Further, the second translucent film 102 may be formed of glass. The surface 102a of the second translucent film 102 is bonded to the first translucent film 101 via a transparent adhesive layer 104. In this manner, a translucent layer 14 including the structural layer 13 is formed. The translucent layer 14 is structured by the first translucent film 101, the second translucent film 102, and the adhesive layer 104.

The second translucent film 102 is formed of a transparent material. The second translucent film 102 may be formed of a resin material, which is the same kind of the first translucent film 101. However, in this embodiment, the second translucent film 102 is formed of an ultraviolet-curable resin.

Compositions structuring an ultraviolet-curable resin include, for example, (meta)acrylate and a photopolymerization initiator. Further, as necessary, the composition may further include a light stabilizer, a flame retardant, a leveling agent, an antioxidant, and the like. As acrylate, monomer and/or oligomer having two or more (meta)acryloyl groups may be used. As the monomer and/or oligomer, for example, urethane(meta)acrylate, epoxy(meta)acrylate, polyester(meta)acrylate, polyol(meta)acrylate, polyether(meta)acrylate, melamine(meta)acrylate, and the like may be used. Here, (meta)acryloyl group means any one of acryloyl group and metaacryloyl group. Oligomer means molecules whose molecular weight is equal to or larger than 500 and equal to or smaller than 6000. As photopolymerization initiator, for example, benzophenone derivative, acetophenone derivative, anthraquinone derivative, and the like may be used alone or in combination.

The base material 111 is formed of a translucent resin film, which is layered on the other surface 102b (second surface) of the second translucent film 102. The base material 111 also has a function of a protective layer, is formed of a transparent material, and is formed of, for example, a resin material, which is the same kind of the first translucent film 101. The base material 111 may be layered on not only the outer surface of the second translucent film film 102, but also the outer surface of the first translucent film 101.

The optical device 1 having the above-mentioned layered structure is layered on a window material W at the room side. A wide variety of glass materials may be used as the window material W. The kind is not specifically limited. A float plate glass, a laminated glass, a security glass, or the like may be applied. In the optical device 1 of this embodiment, the outer surface of the first translucent film 101 is formed as a light-incident surface, and the outer surface of the base material 111 is formed as a light-output surface. In this embodiment, the first translucent film 101, note that, the base material 111 may be omitted as necessary. In this case, the surface 102b of the second translucent film 102 is formed as a light-output surface.

[Structural layer]

Next, the structural layer 13 will be described in detail.

The structural layer 13 has a periodic structure including airspaces 130 (reflectors) arrayed in the vertical direction (Z-axis direction) at predetermined pitches. The airspace 130 has the height h (first length) in the X-axis direction (first direction), and has the width w (second length) in the Z-axis direction (second direction). The airspaces 130 are formed in the Z-axis direction at array-pitches p. Further, the airspace 130 is formed linearly in the Y-axis direction.

In Fig. 2, the upper surface of each of the airspaces 130 forms a reflection surface 13a, which reflects light L1 entering through a light-incident surface 11 toward a light-output surface 12. That is, the reflection surface 13a is formed of an interface between the resin material structuring the second translucent film 102 and air in the airspace 130. In this embodiment, the relative refractive index of the second translucent film 102 is, for example, 1.3 to 1.7. There is a refractive index difference between the second translucent film 102 and the air (refractive index 1) in the airspace 130. Note that the above-mentioned second medium is not limited to air. For example, the airspace 130 may be filled with a material, which has a refractive index lower than that of the second translucent film 102, to thereby form the reflection surface 13a.

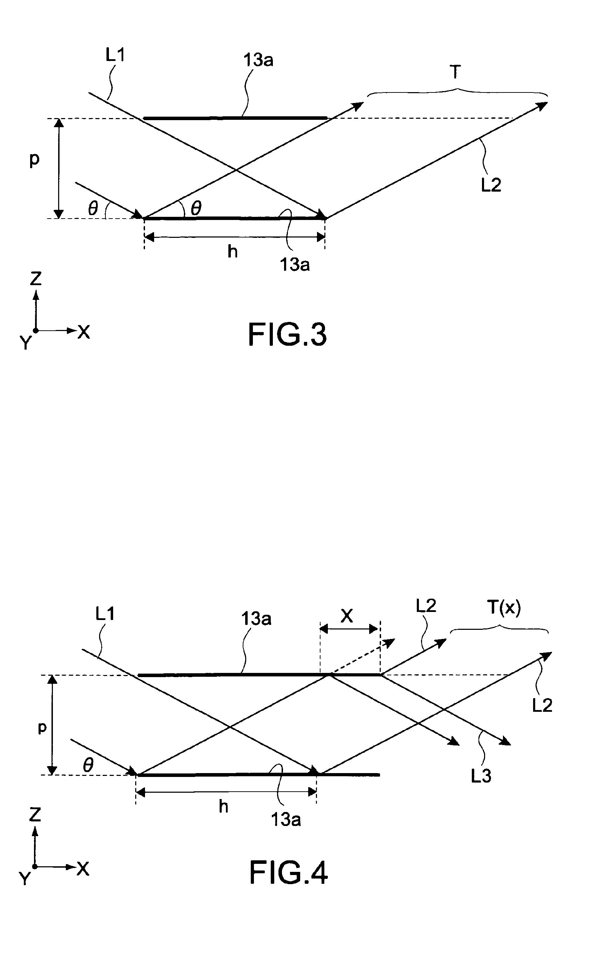

Fig. 3 is a schematic diagram for explaining a function of the reflection surface 13a. The reflection surface 13a reflects the entire incident light L1, which enters the reflection surface 13a from the above, to thereby form output light L2, which is output to the above. Note that, here, the case where the light output direction is the above is described. However, it is not limited to this. The light output direction may be changed according to a light incident direction, a direction in which the optical device is installed, and the like.

With reference to Fig. 3, h is indicative of the height of the reflection surface, p is indicative of the array-pitch, and $\theta$ is indicative of the incident angle of the incident light L1, which enters the reflection surface 13a, with respect to the X-axis direction. Here, the incident angle $\theta$ means an incident angle of light with respect to the X-axis direction, which travels on the XY plane, out of the light entering the reflection surface 13a. Here, in a case where the entire incident light L1 is reflected by the reflection surface 13a, if the Expression (1) is satisfied, the entire incident light ray, which enters at the incident angle $\theta$, is output to the above at the angle $\theta$.

[Expression 1]

$$h=(2n-1)\cdot p/\tan\theta \qquad (1)$$

$$(n\in N)$$

Here, n is a natural number, and represents the number that the entire incident light L1 is reflected by the same reflection surface 13a.

In the optical device 1 of this embodiment, the height (h) and the array-pitch (p) between the reflection surfaces 13a are set such that the above-mentioned Expression (1) is satisfied at any angle ($\theta$) in a predetermined angular range. Hereinafter, the incident angle $\theta$, which satisfies Expression (1), is referred to as set incident angle.

In the above-mentioned Expression (1), as shown in Fig. 3, an output width T of the output light L2 may be considered as an output light intensity of the output light L2 output to the above. Here, the output light intensity ($T(\theta)$) of the output light L2 is formulated by using the incident angle $\theta$ of the incident light L1 and the array-pitch p of the reflection surfaces 13a. The following Expression (2) shows the output light intensity ($T(\theta)$) of the output light L2.

[Expression 2]

$$T(\theta)=p/\tan\theta \qquad (2)$$

Meanwhile, in a case where the incident light L1 enters the reflection surface 13a at an angle different from the above-mentioned set incident angle, the light intensity of the output light L2, which is output to the above, is decreased. The change of the incident angle is considered as the change of the height h of the reflection surface 13a. Fig. 4 is a schematic diagram for explaining an intensity of light output to the above in a case where the height of the reflection surface 13a is increased by x. Expression (3) shows an output light intensity (T(x)) to the above in a case where, as shown in Fig. 4, the height of the reflection surface 13a is increased by x.

[Expression 3]

$$T(x)=p/\tan\theta-x \qquad (3)$$

Because the height of the reflection surface 13a is increased, multireflection of light by the adjacent reflection surfaces is generated, and light L3 output to the below is increased. Therefore, in the example shown in Fig. 4, the following Expression (4) shows the ratio between the intensity (T(θ)) of light output to the above and the intensity of light output at the above-mentioned set incident angle.

[Expression 4]

$$T=(p/\tan\theta-x)/(p/\tan\theta)$$
$$=(1-\tan\theta/p\cdot x) \qquad (4)$$

As described above, the intensity of light output from the reflection surface 13a to the above changes according to the change of the incident angle from the above-mentioned set incident angle. The larger the amount of change of the incident angle, the larger the reduction of the output light intensity. In view of this, the above-mentioned set incident angle is set in consideration of output loss because of the change of angle from the set incident angle, may be arbitrarily set according to an intended purpose and an incident angular range of light entering the reflection surface 13a, and, in addition, is optimized according to a light intensity to be output to the above. For example, in a case where the optical device 1 is used as a sunlight daylighting device as in this embodiment, the set incident angle may be set according to an incident angular range of sunlight in an area, a season, or a period of time in which daylighting is used, according to the area to be irradiated with the daylighting output light, and the like.

In this embodiment, for example, the reflection surface 13a is formed such that the above-mentioned set incident angle is equal to or larger than 6.5° and equal to or less than 87.5°. The lower limit 6.5° corresponds to the solar altitude on the winter solstice in North Europe (for example, Oslo (Norway)), and the upper limit 87.5° corresponds to the solar altitude on the summer solstice in Naha (Japan). The above-mentioned set incident angle is, for example, about 60°. As a result, sunlight is introduced efficiently in regions across the globe throughout the year. Further, this will greatly reduce electric power consumptions of lightening equipments in the daytime. The height (h) and the array-pitch (p) between the reflection surfaces 13a may be arbitrarily set according to the thickness (dimension in X-axis direction) of the optical device 1, and are set in the ranges, that is, h=10 to 1000 μm and p=100 to 800 μm, for example.

Next, the aperture ratio of the structural layer 13 will be described.

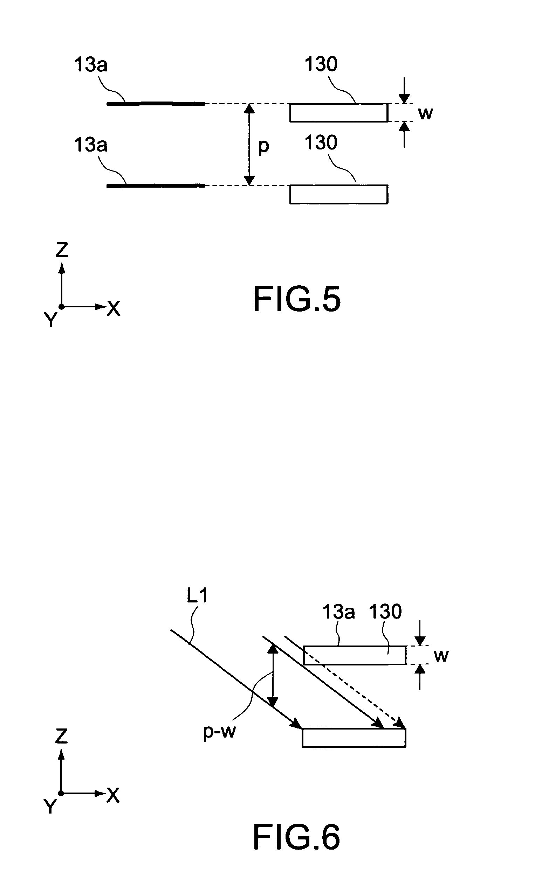

In the structure shown in Fig. 2, the reflection surface 13a is formed on the surface of the airspace 130 having the width or thickness (w) in the Z-axis direction. Because of this, in the optical device 1 of this embodiment, the practical array-pitch between the reflection surfaces 13a is affected by the width size of the airspace 130. Fig. 5 shows the relation between the array-pitch (p) between the reflection surfaces 13a and the width (w) of the airspace 130. As shown in Fig. 5, the following Expression (5) shows the effective array-pitch between the reflection surfaces 13a.

[Expression 5]

$$AR\equiv(p-w)/p \qquad (5)$$

Here, AR is indicative of the aperture ratio of the structural layer 13. In a case where an aperture ratio is small, the output ratio of incident light is decreased, and in addition, visibility of the outside of the window is degraded greatly. Fig. 6 is a schematic diagram for explaining the fact that an output light intensity of the incident light L1 is decreased according to the width (w) of the airspace 130. As shown in Fig. 6, the incident light L1 is blocked from entering the reflection surface by an amount corresponding to the width w of the airspace 130. In view of the above, the above-mentioned Expression (5) shows the light intensity of the incident light L1 entering the reflection surface 13a in consideration of the width w of the airspace 130. The following Expression (6) shows the output ratio of the incident light L1 to the above, in which the above-mentioned Expression (5) is in combination with the above-mentioned Expression (4).

[Expression 6]

$$T=(1-\tan\theta/p\cdot x)\cdot\{(p-w)/p\} \qquad (6)$$

According to this embodiment, the width (w) of the airspace 130 is 0.1 μm or more. The upper limit of the width (w) of the airspace 130 is determined according to the size of the array-pitch (p) between the reflection surfaces 13a. Further, the aperture ratio (AR) of the structural layer 13 is set to 0.2 or more, to thereby efficiently extract light output to the above.

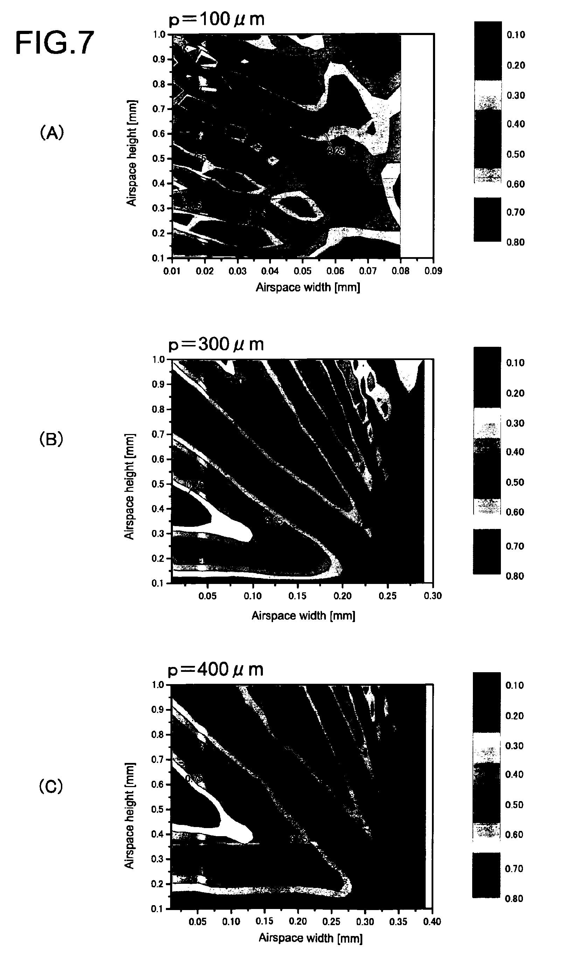

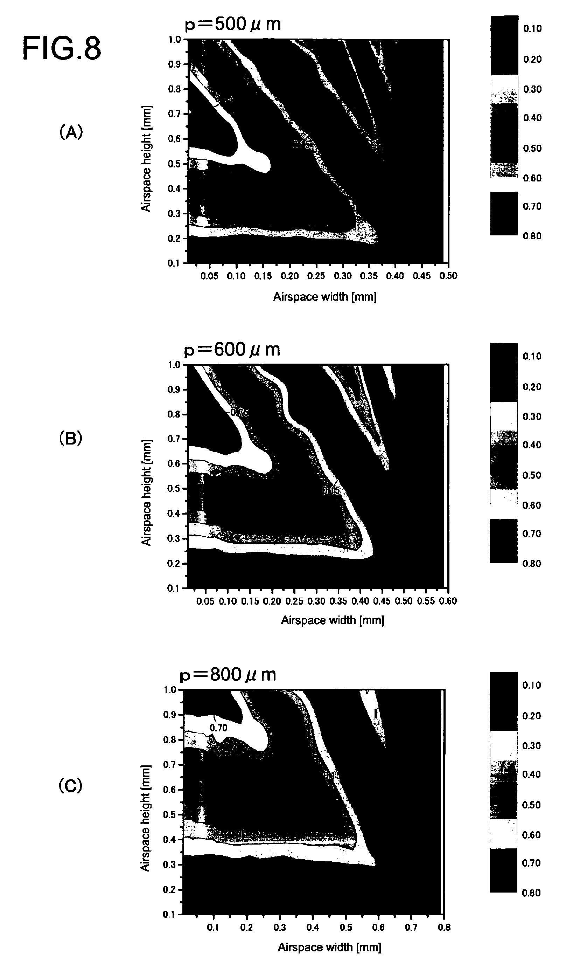

Each of Figs. 7 and Figs. 8 shows a simulation result showing a relation between the height (h: airspace height) of the reflection surface and the width (w) of the airspace in relation to a ratio between incident light of light output to the above and output. The incident angle in the reflection surface from the above is set to 60°. Note that "LightTools" manufactured by ORA (Optical Research Associates) is used for simulation.

Fig. 7(A) shows the simulation result in a case where the array-pitch (p) between the reflection surfaces is 100 μm. Similarly, Fig. 7(B) shows the simulation result in a case of p=300 μm, Fig. 7(C) shows the simulation result in a case of p=400 μm, Fig. 8(A) shows the simulation result in a case of p=500 μm, Fig. 8(B) shows the simulation result in a case of p=700 μm, and Fig. 8(C) shows the simulation result in a case of p=800 μm. As shown in Fig. 7 and Fig. 8, the smaller the airspace width, the larger the output ratio to the above. Further, the larger the array-pitch between the reflection surfaces, the larger the output ratio to the above in an area of a larger airspace height.

[Method of manufacturing optical device]

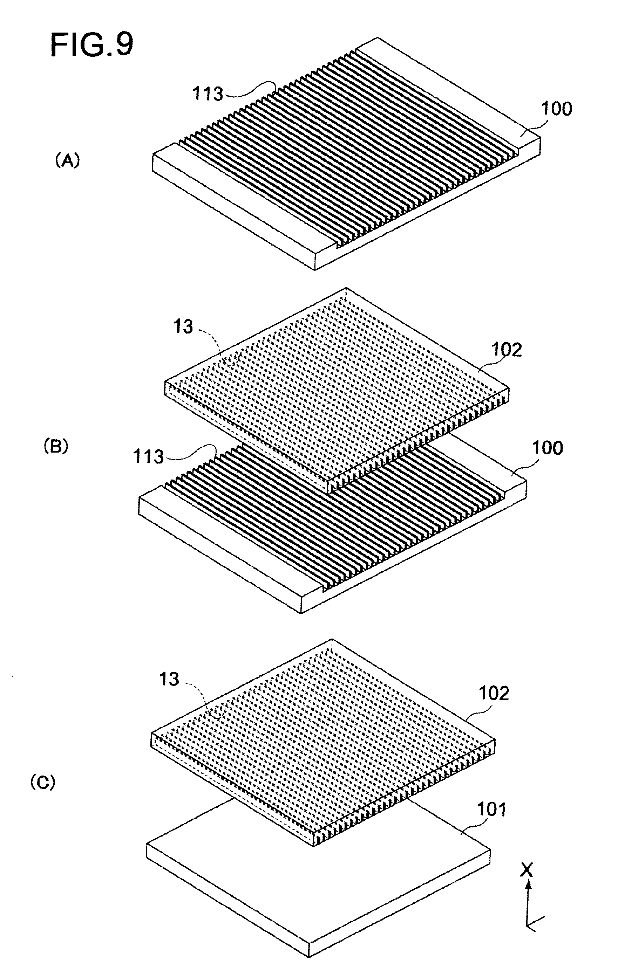

Next, a method of manufacturing the optical device 1 structured as described above will be described. Figs. 9(A) to (C) are schematic perspective views for explaining a method of manufacturing the optical device 1 of this embodiment, and show a main process.

First, as shown in Fig. 9(A), a master 100 for manufacturing the second translucent film 102 (Fig. 2) is prepared. The master 100 is formed by a metal mold, a resin mold, or the like. A concavo-convex shape 113, which has a shape corresponding to the structural layer 13, is formed on one surface of the master 100. Then, as shown in Fig. 9(B), the concavo-convex shape 113 of the master 100 is transferred onto a resin sheet, to thereby form the second translucent film 102 having the structural layer 13.

In this embodiment, the second translucent film 102 is formed of an ultraviolet-curable resin. Although not shown, in a state where the resin is sandwiched between the base material 111 and the master 100, the resin is irradiated with ultraviolet light via the base material 111, whereby the second translucent film 102 is manufactured. In this case, as the base material 111, a resin material such as PET, which is excellent in ultraviolet permeability, is used.

Further, the second translucent film 102 may be successively manufactured in a roll-to-roll system. In this case, the master 100 may be formed into a roll shape.

Next, as shown in Fig. 9(C), the second translucent film 102 is adhered to the first translucent film 101 via the adhesive layer 104 (Fig. 2). As a result, the optical device 1 shown in Fig. 2 is manufactured.

According to the above-mentioned manufacturing method, the optical device 1 internally including the structural layer 13 may be easily manufactured. Further, the optical device 1 may be easily made thinner (for example, 25μ m to 2500 μm). Further, because the base material 111 is layered on the second translucent film 102, the optical device has an appropriate stiffness, and the handling ability and the durability of the optical device are improved.

The optical device 1 manufactured as described above is attached to the window material W to be used, but the optical device 1 may be used alone. According to this embodiment, incident light, which enters the reflection surfaces 13a of the structural layer 13 from the above at the predetermined angular range, may be efficiently output from the light-output surface 12 to the above. Therefore, in a case where the above-mentioned optical device 1 is used as a sunlight daylighting device, sunlight may be efficiently introduced toward a ceiling in a room.

<Second Embodiment>

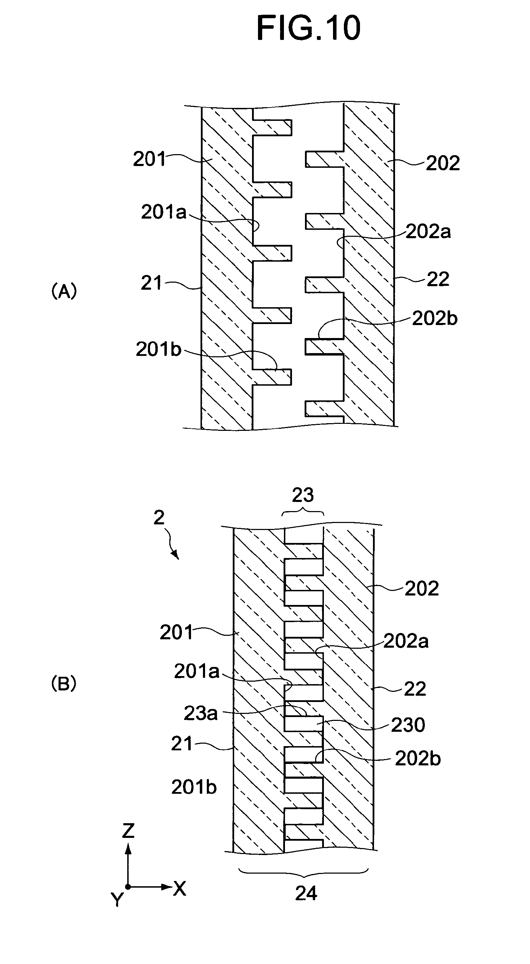

Next, a second embodiment of the present invention will be described. Each of Figs. 10(A) and (B) shows an optical device according to the second embodiment of the present invention.

An optical device 2 of this embodiment includes, as a basic structure, a first translucent film 201 and a second translucent film 202. As shown in Fig. 10(A), the first translucent film 201 includes an outer surface, which forms a light-incident surface 21, and an inner surface, on which a plurality of concave portions 201a extending in the Y-axis direction and arrayed in the Z-axis direction are formed. Meanwhile, the second translucent film 202 includes an outer surface, which forms a light-output surface 22, and an inner surface, on which a plurality of concave portions 202a extending in the Y-axis direction and arrayed in the Z-axis direction are formed. The inner surfaces of the first translucent film 201 and the second translucent film 202 have convex portions 201b and convex portions 202b, respectively, which are divided by the concave portions 201a and the concave portions 202a, respectively. Both the convex portions 201b, 202b projects in the X-axis direction substantially in parallel, and have the same project length.

As shown in Fig. 10(B), the first translucent film 201 is layered on the second translucent film 202 such that the convex portions 201b, 202b of one film is arranged in the middle of the concave portions 201a, 202a of the other film, whereby the optical device 2 of this embodiment is manufactured. As a result, there is formed a structural layer 23 having a plurality of airspaces 230, which are arrayed in the Z-axis direction and have the same shape, between the concave portions 201a, 202a and the convex portions 201b, 202b. In this manner, the optical device 2 including a translucent layer 24 internally having the structural layer 23 is structured.

In the optical device 2 of this embodiment, a reflection surface 23a for reflecting sunlight is formed on the upper surface of each of the airspaces 230. The height, the thickness, and the array-pitch of the reflection surface 23a is set based on the height, the width, and the pitch of the convex portions 201b, 202b, respectively. According to the optical device 1 having such a structure, function effects similar to those of the above-mentioned first embodiment are obtained.

Note that each of the first translucent film 201 and the second translucent film 202 is manufactured by using the master 100 shown in Fig. 9(A). The translucent films 201, 202 may be bonded by using a transparent adhesive layer or the like.

<Third Embodiment>

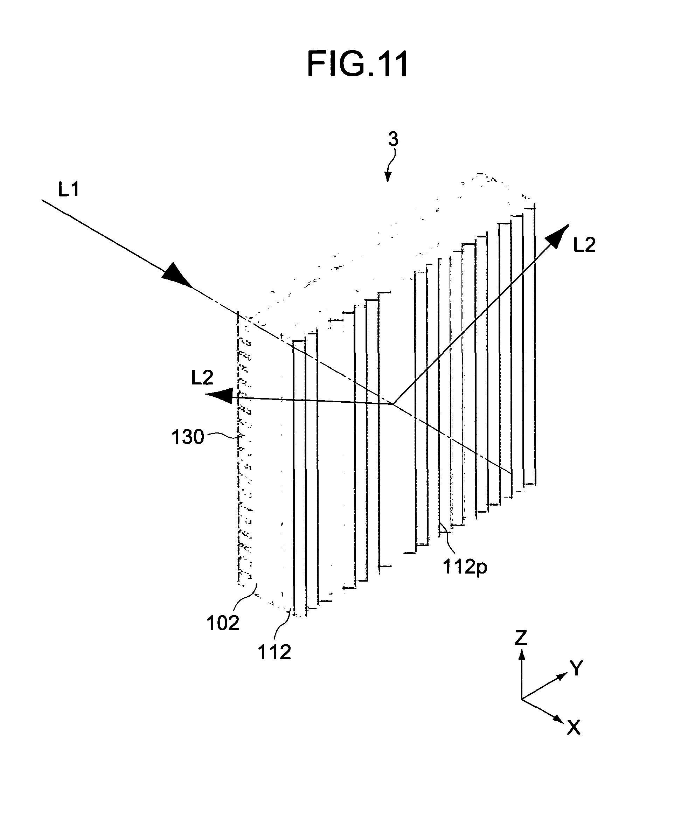

Fig. 11 is a perspective view showing an optical device according to a third embodiment of the present invention. An optical device 3 of this embodiment has a layered structure including a translucent film 102, which has the airspaces 130 formed on one surface, and a prism sheet 112 (second base body), which has a structural surface in which prisms 112p are arrayed. The airspaces 130 are formed on the light-incident-side surface of the translucent film 102, and the prisms 112p are formed on the light-output-side surface. The direction of the ridges of the prisms 112p is the Z-axis direction, and the prisms 112p are arrayed in the Y-axis direction.

In the optical device 3 structured as described above, the direction of the ridges of the prisms 112p is the arrayed direction of the airspaces 130 (Z-axis direction). As a result, incident light, which is reflected by the upper surface (reflection surface) of the airspace 130, diffuses in the Y-axis direction because of the refraction function on the inclined surfaces of the prisms 112p when the light passes through the prism sheet 112, and is output. Because of this, it is possible to simultaneously obtain the function of outputting light, which enters the optical device 3, to the above, and the function of diffusing light in the lateral direction.

The array-pitch, the height, the measure of the apex angle, and the like of the prisms 112p may be arbitrarily set according to target light-output characteristics. Further, the translucent film 102 and the prism sheet 112 may divide incident light into four directions, i.e., right, left, up, and down.

The prisms 112p are not necessarily formed periodically, but the prisms 112p having different sizes and shapes may be formed non-periodically. Further, the prism sheet 112 may be provided on the light-incident side of the translucent film 102. Further, the array direction of the prisms 112p is not limited to the Y-axis direction as described above, but may be a direction obliquely-crossing the array direction of the airspaces 130.

A base body having a light-diffusing ability is not limited to the above-mentioned prism sheet, but may be a wide variety of translucent films having light-diffusion elements having periodic or non-periodic shapes, such as a film having surface asperities, a translucent film on which thready asperities are formed, and a translucent film having a surface on which hemispherical or columnar curved lenses are formed. Further, as a film having a light-diffusing ability, a film having a structural surface same as that of the translucent film 102 may be used. In this case, the film is layered in a direction in which the shape of the film intersects with the shape of the translucent film 102 disposed in the light-incident side, whereby diffusion property is improved.

<Fourth Embodiment>

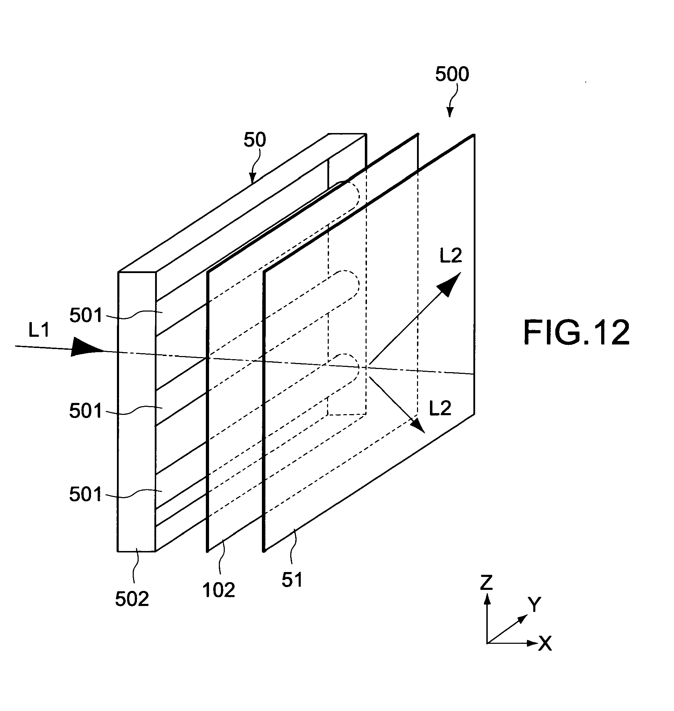

Fig. 12 shows a fourth embodiment of the present invention. An illuminating device 500 according to this embodiment includes an illuminant 50, an advertising medium 51, and the translucent film 102, which is arranged between the illuminant 50 and the advertising medium 51.

The illuminant 50 includes a plurality of linear light sources 501, and a casing 502 accommodating the light sources 501. The inner surfaces of the casing 502 have light reflectivity, and may additionally have, as necessary, a function of collecting light output from the light sources 501 forward.

The translucent film 102 has a structure similar to that of the above-mentioned first embodiment, and includes a light-incident surface, which faces the illuminant 50, and a light-output surface, which faces the advertising medium 51. On the light-incident-surface side of the translucent film 102, the airspaces (130) each having the reflection surface (13a) are arrayed in the Z-axis direction at the predetermined pitches.

The advertising medium 51 is formed of a translucent film or sheet, and has a surface on which advertising information including letters, graphics, photographs, and the like is displayed. The advertising medium is integrated with the illuminant 50 such that the advertising medium covers the translucent film 102. The advertising medium is irradiated with illuminating light, which is formed by the illuminant 50 and the translucent film 102, whereby the advertising medium displays advertising information in the front direction.

According to this embodiment, the translucent film 102 has a function of directionally outputting light upward, for example, whereby intensities of light passing through the advertising medium 50 are different in the vertical direction by a predetermined amount. In this manner, the advertising medium 50 has a desired luminance distribution, whereby a decorative effect of the advertising medium is increased based on the luminance difference, and the appearance of the advertising display may be improved. Further, according to this embodiment, display light of the advertising medium 50 may have a luminance distribution according to viewing directions, whereby consumers may receive different impressions of display or decoration according to the position, the angle, the height, and the like, of consumers with respect to the advertising medium 50, which is watched by the consumers.

Further, according to this embodiment, by arbitrarily changing the shape, the array-pitch, the width, the depth, the period, and the like of the airspaces (130) of the translucent film 102, a desired luminance distribution may be attained easily according to display content of the advertising medium.

Hereinbefore, the embodiments of the present invention have been described. As a matter of course, the present invention is not limited to the embodiments, and may be variously modified based on the technical ideas of the present invention.

For example, in the above-mentioned embodiments, there is described an example in which the light-incident surface and the light-output surface of the optical device 1 are arranged in the vertical direction (Z-axis direction). Alternatively, the optical device may be arranged on the horizontal plane or an inclined plane. In this case, the height and the like of the reflection surface may be arbitrarily adjusted such that daylighting light is output to a desired area. Further, the daylighting object is not limited to sunlight, but may be artificial light. Further, the light-introducing direction is not necessarily limited to the above, but may be a lateral direction or a lower direction. Light may be separately output in a plurality of directions.

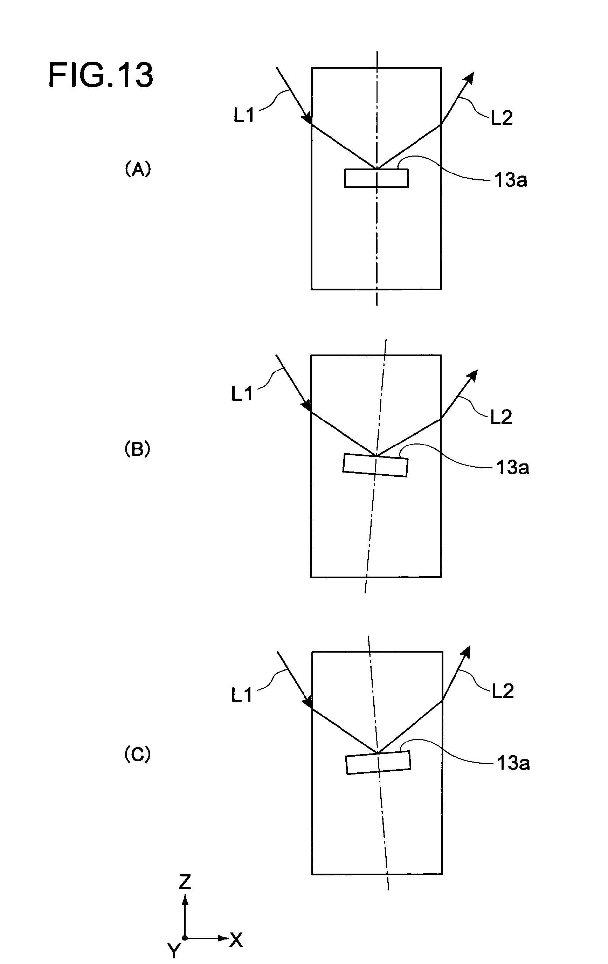

Further, in the above-mentioned embodiments, as schematically shown in Fig. 13(A), there is described an example in which the reflection surface 13a is arranged in parallel with the thickness direction (X-axis direction) of the device. Alternatively, as shown in Figs. 13(B) and (C), the reflection surface 13a may be inclined with respect to the X axis. In the cases where the reflection surface 13a is inclined with respect to the X axis in such manners, the output direction of the output light L2 may also be controlled. Therefore the optical device is designed from the optical viewpoint by combining the incident angle ($\theta$) of the incident light L1 with respect to the reflection surface 13a, the height (h), the thickness (w), and the pitch (p) of the reflection surfaces 13a, and the like.

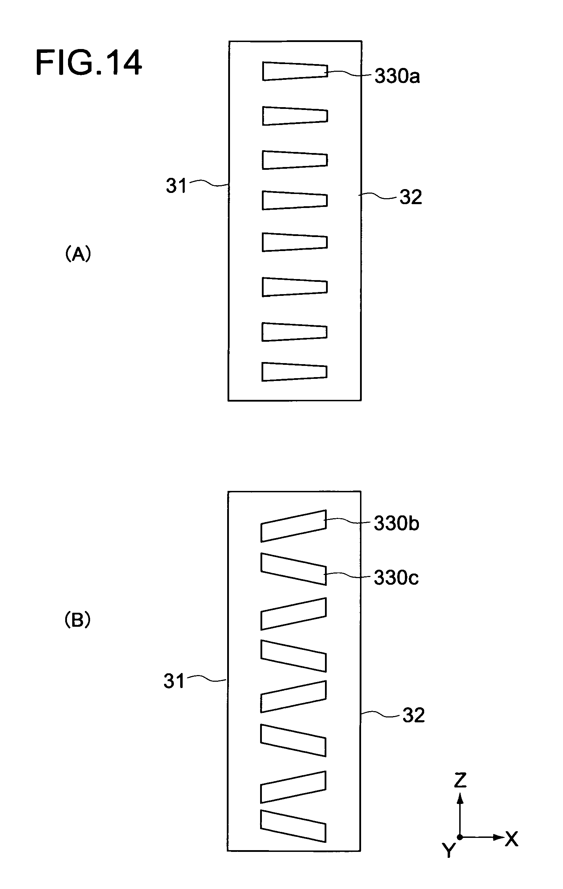

Further, the pair of reflection surfaces formed on the upper and lower surfaces of the airspace are not limited to the surfaces in parallel with each other as described above, but may not be in parallel with each other. For example, Fig. 14(A) schematically shows an optical device including a structural layer having airspaces 330a, which has upper and lower tapered reflection surfaces, in which the thickness is successively decreased from a light-incident surface 31 side to a light-output surface 32 side. Meanwhile, an optical device shown in Fig. 14(B) has a structure in which airspaces 330b, each of which has upper and lower reflection surfaces inclined in the +Z direction, and airspaces 330c, each of which has upper and lower reflection surfaces inclined in the -Z direction, are alternately arrayed in the Z-axis direction from the light-incident surface 31 side to the light-output surface 32 side. By combining taper angles or taper directions of upper and lower surfaces of airspaces with each other, light distribution may be controlled more precisely, or more complex dimming functions may be attained.

Similar to the embodiment described with reference to Figs. 10, the optical device shown in each of Figs. 14(A), (B) is manufactured by layering two translucent films. That is, the optical device shown in Fig. 14(A) is manufactured by layering a flat film on an inner surface of a film, on which convex portions each having tapered reflection surfaces are formed. Further, the optical device shown in Fig. 14(B) is manufactured by layering two translucent films such that convex portions formed on the inner surfaces of the translucent films, each of which has tapered reflection surfaces, are alternately arranged.

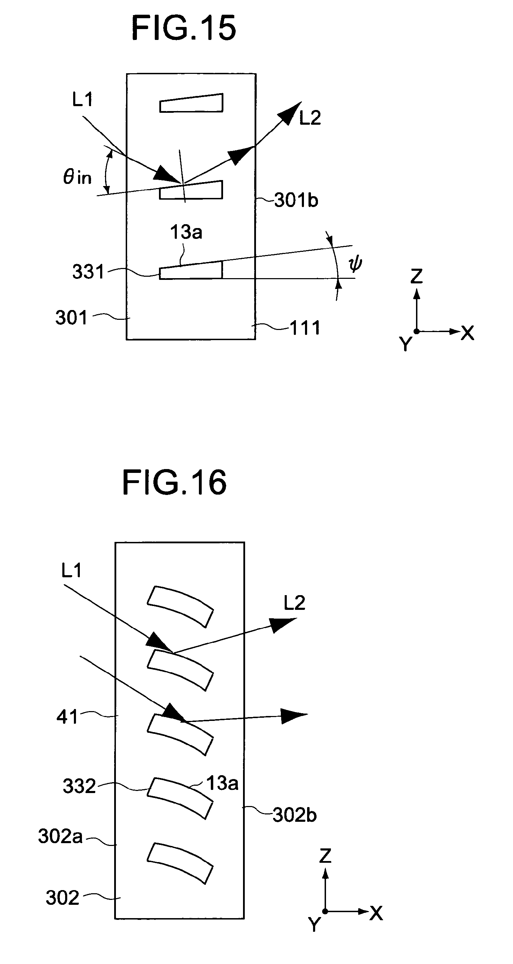

Note that at least one of the pair of reflection surfaces, which are formed on the upper and lower surfaces of the airspace, may be inclined with respect to the X-axis direction. For example, Fig. 15 shows airspaces 331 each having a reflection surface, which is inclined with respect to the X axis at a predetermined taper angle ($\psi$), and a reflection surface, which is in parallel with the X-axis direction.

Further, when setting a taper angle of a reflection surface, it is necessary to consider total reflection of light, which passes through the optical device, by a light-output surface. For example, Fig. 15 schematically shows an optical device including a translucent film 301 internally having the airspaces 331. The upper surface of the airspace 331 has the reflection surface 13a, which is inclined with respect to the X axis at a taper angle $\psi$. Here, the following Expression (7) shows a condition in which the incident light L1, which is entirely reflected by the reflection surface 13a, is not entirely reflected by a light-output surface 301b, but is extracted to the outside (air) as the output light L2. The taper angle $\psi$ may be defined in a range, which satisfies this expression.

[Expression 7]

$$(ni+n_{air}\sin(\theta_{in})(ni-n_{air}\sin(\theta_{in}))(\sin^2(2\psi)) < n_{air}^2(1-\cos(2\psi)\sin(\theta in))^2 \quad (7)$$

Here, ni is indicative of a refractive index of the translucent film 301, $n_{air}$ is indicative of a refractive index of air, and $\theta_{in}$ is indicative of an incident angle of an incident light ray L1 with respect to the reflection surface 13a.

Meanwhile, Fig. 16 schematically shows an optical device including a translucent film 302 internally having airspaces 332, each of which has the curved reflection surface 13a. The reflection surface 13a has a curved shape in which the reflection surface 13a is curved in the Z-axis direction from a light-incident surface 302a side to a light-output surface 302b side. Because of this, the light L1 entering the reflection surface 13a is reflected at a different angle according to a position on the reflection surface 13, which the light L1 reaches. As a result, in Fig. 16, light L2 extracted by the light-output surface 302b ranges in a predetermined upper angular range. Accordingly, a wider area may be irradiated with extracted light.

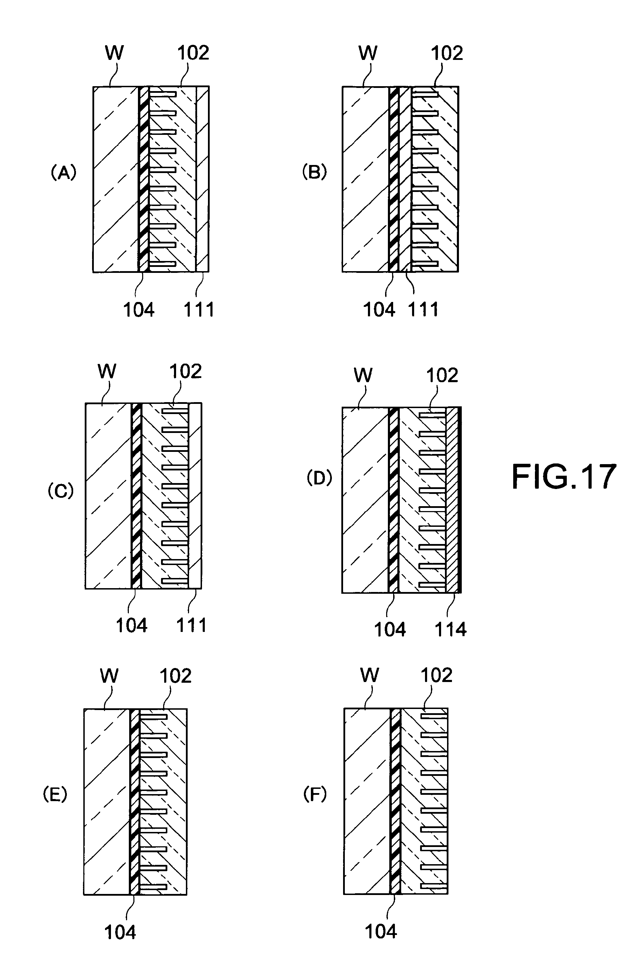

Further, each of the above-mentioned embodiments discloses, as shown in Fig. 1, the optical device having a structure in which the first translucent film 101, the adhesive layer 104, the second translucent film 102, and the base material 111 are layered on the window material W. However, the structure is not limited to this. For example, as shown in Figs. 17(A) to (D), the layered structure of the optical device may be set arbitrarily.

Fig. 17(A) shows an example in which the translucent film 102 including the airspaces is directly attach to the window material W via the adhesive layer 104. As shown in Fig. 17(E), the base material 111 may be omitted. Fig. 17 (B) shows an example in which the base material 111 is adhered to an airspace-formed surface of the translucent film 102 and is attached to the window material W. In this example, after the translucent film 102 is formed, the translucent film 102 is integrated with the base material 111 by thermal welding or the like. In this case, welding is performed such that no interface exists between both the films. Further, according to this example, the adhesive agent 104 may not enter the airspaces.

Each of Figs. 17(C) and (D) shows an example in which the translucent film 102 is attached to the window material W such that the airspaces are arranged in the light-output side. According to such a structure, effects similar to those of the above-mentioned first embodiment may also be obtained. In Fig. 17(C), the base material 111 may be omitted as shown in Fig. 17(E). Further, Fig. 17(D) shows an example in which a patterned film 114, which has light-diffusion elements such as prisms and asperities formed on a surface, is layered on a light-output side of the translucent film 102. Function effects thereof are similar to those of the embodiment described with reference to Fig. 11.

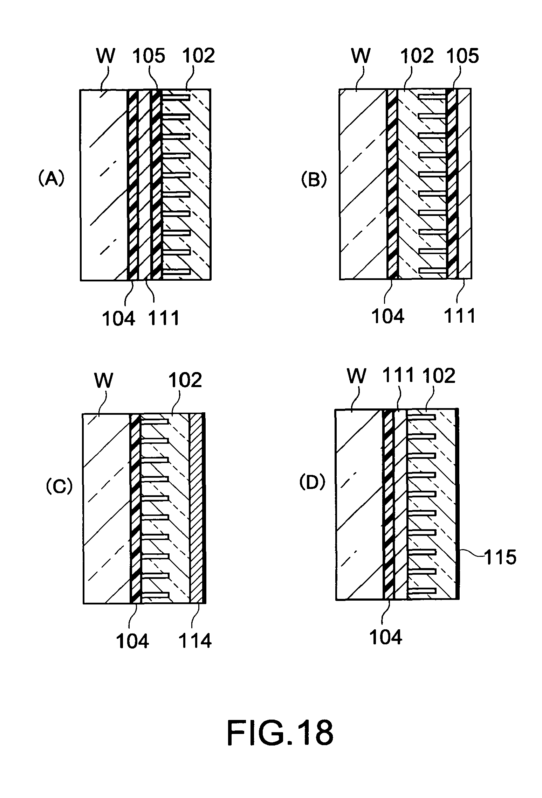

Each of Figs. 18(A) and (B) shows an example in which the translucent film 102 is bonded to the base material 111 via a translucent adhesive layer 105. As the adhesive layer 105, a material, which is the same kind of the adhesive layer 104, may be used. In the structural example shown in Fig. 18(A), the translucent film 102 has the airspaces on the light-incident side, and the base material 111 is bonded to the light-incident side. In the structural example shown in Fig. 18(B), the translucent film 102 has the airspaces on the light-output side, and the base material 111 is bonded to the light-output side.

Fig. 18(C) shows a structural example in which the base material 111 of Fig. 17(A) is replaced with the film 114, which has a light-diffusing ability. Fig. 18(D) shows an example in which a patterned film 115 having a light-diffusing ability is bonded to the light-output side of the translucent film 102 of the structural example shown in Fig. 17(B). In place of bonding the patterned film 115, a concavo-convex shape may be directly formed on the light-output surface of the translucent film 102, to thereby attain a light-diffusion function.

Description of Symbols

| | |
|---|---|
| 1, 2, 3 | optical device |
| 11, 21, 31 | light-incident surface |
| 12, 22, 32 | light-output surface |
| 13, 23 | structural layer |
| 13a, 23a | reflection surface |
| 14, 24 | translucent layer |
| 101, 201 | first translucent film |
| 102, 202 | second translucent film |
| 104, 105 | adhesive layer |
| 112 | prism sheet |
| 114, 115 | patterned film |
| 130, 230, 330a, 330b, 331, 332 | airspace |
| L1 | incident light |
| L2 | output light |
| W | window material |
| θ | incident angle |

## Claims

**1.** An optical device, comprising:

a first surface;
a second surface facing the first surface in a first direction; and
a structural layer including a plurality of reflection surfaces, the plurality of reflection surfaces reflecting light entering the first surface toward the second surface, the plurality of reflection surfaces having a first length in the first direction, the plurality of reflection surfaces being arrayed in a second direction orthogonal to the first direction, the plurality of reflection surfaces satisfying a relation of

$$h=(2n-1)\cdot p/\tan\theta$$

where h is indicative of the first length, p is indicative of an array-pitch of the reflection surfaces, θ is indicative of an incident angle of incident light with respect to the first direction, the incident light being light travelling on a plane having the first direction and the second direction out of light entering the reflection surface, and n is indicative of the number of reflection of incident light by the reflection surface, the angle θ being any angle satisfying the range of $6.5° \leq \theta \leq 87.5°$.

**2.** The optical device according to claim 1, wherein in a case where the first length is increased by x,

$$T=1-(\tan\theta/p)\cdot x$$

is satisfied where T is indicative of a light intensity ratio between an intensity of light reflected by the reflection surface and output from the second surface, and an intensity of light before the first length is increased.

**3.** The optical device according to claim 2, wherein the reflection surface is a reflector having a second length in the second direction, and the light intensity (T) satisfies a relation of

$$T=\{1-(\tan\theta/p)\cdot x\}\cdot(p-w)/p$$

where w is indicative of the second length.

**4.** The optical device according to claim 3, wherein the structural layer satisfies a relation of $(p-w)/p\geq 0.2$.

**5.** The optical device according to claim 3, wherein the reflector is a air layer, the reflection surface is formed on each of a pair of surfaces of the air layer, the pair of surfaces facing in the second direction, and at least one of the reflection surfaces is in parallel with the first direction.

**6.** The optical device according to claim 5, wherein the reflection surfaces are not in parallel with each other.

**7.** The optical device according to claim 5, wherein at least one of the reflection surfaces is a curved surface.

**8.** The optical device according to claim 1, further comprising:

a translucent first base body between the first surface and the second surface, the first base body internally having the structural layer.

**9.** The optical device according to claim 8, further comprising:

a second base body layered on the first base body, the second base body having a concavo-convex shape formed periodically or non-periodically, the concavo-convex shape having a light-diffusing ability.

**10.** The optical device according to claim 9, wherein the concavo-convex shape are prisms, the prisms having a ridge direction in the second direction, the prisms being arrayed in a third direction, the third direction being orthogonal to the first direction and the second direction.

**11.** An illuminating device, comprising:

a first surface;
a second surface facing the first surface in a first direction;
a structural layer including a plurality of reflection surfaces, the plurality of reflection surfaces reflecting light entering the first surface toward the second surface, the plurality of reflection surfaces having a first length in the first direction, the plurality of reflection surfaces being arrayed in a second direction orthogonal to the first direction, the plurality of reflection surfaces satisfying a relation of

$$h=(2n-1)\cdot p/\tan\theta$$

where h is indicative of the first length, p is indicative of an array-pitch of the reflection surfaces, $\theta$ is indicative of an incident angle of incident light with respect to the first direction, the incident light being light travelling on a plane having the first direction and the second direction out of light entering the reflection surface, and n is indicative of the number of reflection of incident light by the reflection surface, the angle $\theta$ being any angle satisfying the range of $6.5°\leq\theta\leq 87.5°$; and
an illuminant arranged such that the illuminant faces the first surface.

FIG.1

Sun
Rt
L1
L2
LF
1
R
Z
Y
X

FIG.2

1
13
130 13a
11
102a
102b
12
130
130
L1
L2
θ
Z
X
Y
p
w
h
W 101 104
102 111
14

L1
13a
T
p
θ
θ
L2
h
13a
Z
Y
X

FIG.3

L1
13a
X
L2
T(x)
p
θ
L2
L3
h
13a
Z
Y
X

FIG.4

13a
130
w
p
13a
130

Z
Y
X

FIG.5

L1
13a
130
w
p-w
Z
Y
X

FIG.6

FIG.7
(A)
p=100μm
Airspace height [mm]
Airspace width [mm]
1.0
0.9
0.8
0.7
0.6
0.5
0.4
0.3
0.2
0.1
0.01
0.02
0.03
0.04
0.05
0.06
0.07
0.08
0.09
0.10
0.20
0.30
0.40
0.50
0.60
0.70
0.80
(B)
p=300μm
Airspace height [mm]
Airspace width [mm]
0.05
0.10
0.15
0.20
0.25
0.30
(C)
p=400μm
Airspace height [mm]
Airspace width [mm]
0.05
0.10
0.15
0.20
0.25
0.30
0.35
0.40

FIG.8

(A)
p=500μm
Airspace height [mm]
Airspace width [mm]
1.0
0.9
0.8
0.7
0.6
0.5
0.4
0.3
0.2
0.1
0.05 0.10 0.15 0.20 0.25 0.30 0.35 0.40 0.45 0.50
0.10
0.20
0.30
0.40
0.50
0.60
0.70
0.80
(B)
p=600μm
Airspace height [mm]
Airspace width [mm]
1.0
0.9
0.8
0.7
0.6
0.5
0.4
0.3
0.2
0.1
0.05 0.10 0.15 0.20 0.25 0.30 0.35 0.40 0.45 0.50 0.55 0.60
0.10
0.20
0.30
0.40
0.50
0.60
0.70
0.80
(C)
p=800μm
Airspace height [mm]
Airspace width [mm]
1.0
0.9
0.8
0.7
0.6
0.5
0.4
0.3
0.2
0.1
0.70
0.1 0.2 0.3 0.4 0.5 0.6 0.7 0.8
0.10
0.20
0.30
0.40
0.50
0.60
0.70
0.80

FIG.9
(A)
113
100
(B)
13
102
113
100
(C)
13
102
101
X

# FIG.10

(A)

201
202
201a
202a
21
22
202b
201b

(B)

23
2
202
201
202a
201a
22
23a
230
21
202b
201b
Z
X
Y
24

FIG.11

3
L1
L2
L2
130
112p
102
112
Z
Y
X

500
50
L2
501
L1
501
L2
501
502
102
51
Z
Y
X

FIG.12

FIG.13

(A)

L1
L2
13a

(B)

L1
L2
13a

(C)

L1
L2
13a

Z
Y
X

FIG.14

330a
31
32
(A)

330b
330c
(B)
31
32
Z
X
Y

# FIG.15

L1
L2
θin
301b
13a
331
ψ
301
111
Z
Y
X

# FIG.16

L1
L2
41
332
13a
302b
302a
302
Z
Y
X

W
102
(A)
104
111
W
102
(B)
104
111
W
102
(C)
104
111
W
102
(D)
104
114
FIG.17
W
102
(E)
104
W
102
(F)
104

W
105
102
(A)
104
111
W
102
105
(B)
104
111
W
102
(C)
104
114
W
111
102
(D)
115
104

FIG.18

**INTERNATIONAL SEARCH REPORT**

International application No. PCT/JP2011/002035

A. CLASSIFICATION OF SUBJECT MATTER
*G02B5/08*(2006.01)i, *F21S11/00*(2006.01)i

According to International Patent Classification (IPC) or to both national classification and IPC

B. FIELDS SEARCHED

Minimum documentation searched (classification system followed by classification symbols)
G02B5/08, F21S11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2009-168679 A (Fujifilm Corp.), 20 August 2009 (20.08.2009), paragraphs [0015] to [0028], [0041]; fig. 10 (Family: none) | 1-4<br>5-8,11<br>9,10 |
| X<br>Y<br>A | JP 2000-268610 A (The Kansai Electric Power Co., Inc.), 29 September 2000 (29.09.2000), paragraphs [0006] to [0030], [0039]; fig. 1, 4, 7, 8 (Family: none) | 1-6,8<br>7,11<br>9,10 |
| Y | JP 11-315673 A (Shimizu Corp.), 16 November 1999 (16.11.1999), paragraphs [0005] to [0006]; fig. 1, 2 (Family: none) | 7 |

☒ Further documents are listed in the continuation of Box C.

☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| | |
|---|---|
| Date of the actual completion of the international search<br>15 June, 2011 (15.06.11) | Date of mailing of the international search report<br>28 June, 2011 (28.06.11) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2011/002035

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-526906 A (Milner Peter James), 20 August 2002 (20.08.2002), paragraph [0059]; fig. 16<br>& US 6616285 B2 & US 6435683 B1<br>& GB 9820318 A & GB 2341632 A<br>& GB 9820318 A0 & EP 1114235 A<br>& WO 2000/017477 A2 & DE 69931379 D<br>& DE 69931379 T & AU 6102799 A<br>& CA 2344385 A | 11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002526906 A
- JP 2009266794 A
- JP 3513531 B
- JP 2001503190 A